# EUROPEAN PATENT SPECIFICATION

(11) **EP 3 311 024 B1**
(45) Date of publication and mention of the grant of the patent: **12.02.2020**
(21) Application number: 16812018.6
(22) Date of filing: 17.06.2016
(51) Int. Cl.: F03D 80/50, B66C 23/20

(54) **PORTABLE AND MODULAR HOISTING ASSEMBLY FOR A WIND TURBINE**
TRAGBARE UND MODULARE HEBEANORDNUNG FÜR EINE WINDTURBINE
ENSEMBLE DE HISSAGE PORTABLE ET MODULAIRE POUR UNE ÉOLIENNE

(30) Priority: 18.06.2015 NO 20150807
(43) Date of publication of application: 25.04.2018
(73) Proprietor: Maintech AS, 7048 Trondheim (NO)
(72) Inventor: SALOMONSEN, Jan Erik, 7560 Vikhamar (NO)
(74) Representative: Curo AS
(86) International application number: PCT/NO2016/050130
(87) International publication number: WO 2016/204626

(56) References cited:
- EP-A1- 1 808 600
- EP-A1- 2 835 335
- EP-A2- 1 101 934
- EP-A2- 1 101 934
- EP-A2- 1 577 550
- EP-A2- 1 677 006
- EP-A2- 1 677 007
- EP-A2- 1 677 007
- WO-A1-2007/096008
- ES-A1- 2 158 791
- KR-A- 20150 008 749

## Description

The present invention is related to a portable and modular hoisting assembly for a wind turbine, according to the preamble of claim 1.

The present invention is especially related to a portable and modular hoisting assembly being detachably arrangeable to a nacelle of a wind turbine and which is capable of performing heavy lift operations related to the wind turbine.

### Background

In recent years, wind turbines have increased in popularity as a means of electrical power generation. Wind turbines offer the advantages of relatively inexpensively generating power from a renewable energy source as well as having a low impact on the surrounding environment.

In the nacelle of a wind turbine, several heavy wind turbine components, such as gearbox, shaft, generator, transformer etc., are arranged. From time to time, these components need maintenance, repair, or even replacement, and it is therefore often necessary to lower the components down from the nacelle and subsequently hoist them up again for installation in the nacelle.

In the prior art, several solutions are known for lowering wind turbine components down from the nacelle and hoisting them up. In one prior art solution, an external ground level crane is being used. However, since wind turbines are continually increasing in size, the components of the individual wind turbine are also increasing in size and weight. Accordingly, external ground level cranes also need to be of a size where it is possible to handle the heavy components of the wind turbine. Thus, the costs for lowering and hoisting the components of the wind turbine by using external ground level cranes increase with the size of the wind turbine and the weight of the components which need to be handled. There is thus a need for a more cost-effective way of handling, i.e. lowering and hoisting, heavy components from and to the nacelle.

In other solutions in the prior art, service cranes are permanently mounted either on the hub or the nacelle of the wind turbine. However, this increases the weight of the nacelle and thus the load on the tower of the wind turbine. In other solutions, the nacelle and the hub are arranged with crane foundations and attachment points, thus enabling service cranes to be lifted up and mounted on these foundations and attachment points, when a service crane is necessary for the handling of the components from or to the nacelle. However, these foundations and attachments points must be provided with additional support and strengthening support so that the internal service crane may handle high loads, which also increase the weight of the nacelle and thereby the load placed on the tower of the wind turbine. Most of these solutions further suffer from that they will not be able to handle the entire load of heavy components, such as gearbox or blades.

Further, other solutions exist where cranes are arranged internally in the nacelle which suffers from the limited space available in the nacelle.

The cost related to heavy maintenance of wind turbines strongly relates to the weight of the components to be changed out. For wind turbines in the multi megawatt class with a tower height over 80 meters, the components get heavy, e.g. a blade can typical weigh 10 to 15 tons, a hub with blades can weigh at the range of 60 tons, a gearbox can weigh 25 to 50 tons, a generator can weigh in the range of 5 tons for geared turbines and 100 ton for direct drive turbines. A 3MW turbine may have a gearbox that weighs between 25 to 30 tons, and a rotor weigh at the range of 60 tons. A typical external ground level crane does not have this lifting capacity at a height of 80 meters. The currently largest 8MW wind turbine has an individual blade weight of 35 tons, a rotor weight of 210 tons, and a tower height of 140 meters.

For such heavy components, the lifting capacity calls for heavy equipment if external cranes shall be utilized, and this brings along high costs.

For the comparison of crane size we name a small mobile crane as example make; Liebherr LTM 1350-6.1 has a lifting capacity of approx. 5 tons for a nacelle at a 80 to 90 meters high turbine tower. This capacity is not enough to lift out the heavy components of the turbine.

Accordingly, in order to lift the heavy components of the turbine, a much heavier crane has to be used. A typical crane for this application is the Liebherr LR 1600-2 crawler crane. This crane is heavy weight and has to be transported in sections on special carriers, and assembled on site. The mobilization costs and standby costs for such cranes are high, and the availability low. As crane operations can only be carried out at low or moderate wind speeds, there may be large periods of delays "waiting on weather" where the crane and crew are kept standby. This is especially the case in parts of the world where wind is seasonally high as is the case in e.g. the coast of Norway, Ireland or Scotland.

Similar comparisons can be made related to vessel and cranes size related to offshore support vessels, related to offshore wind turbines, however here potential savings are much higher than for land-based applications as the day rates for such vessels may be at the range of 10 times higher than the day rates for external ground level cranes.

From EP 1677007 A2 it is known a wind turbine with a detachable, articulated boom-type crane which is anchored at an end of a frame close to the rotor and its boom is sized to be able to cover the entire surface of the nacelle. The solution further includes a crane support including a turning device to allow for movements of this type required to assemble/dismantle blades of the rotor, gearbox, generator or transformer, having all the crane components mounted on the nacelle. The crane is mounted by the assistance of a detachable auxiliary boom which is mounted on overhead crane of the wind turbine so that it can move lengthways along it.

There is accordingly a need for a solution which reduces costs of such operations, and especially removing the need and costs of a heavy external crane for maintenance operations for the turbine.

Further, by the increasing number of wind turbines, there is a need to increase safety during maintenance operations, and especially neutralizing/avoiding relative movement between tower and external crane. This is important for safety reasons, avoiding unforeseen movement between the turbine and crane structure at heavy loading and load relief.

Accordingly, a hoisting assembly for replacing heavy wind turbine components which is easy to assemble and disassemble is desired. Further, a hoisting assembly reducing the costs for such operations is desirable. It is further desirable to provide a hoisting assembly which increases the safety of such maintenance operations.

### Object

The main object of the present invention is to provide a portable and modular hoisting assembly partly or entirely solving the above mentioned drawbacks of prior art.

An object of the present invention is to provide a portable and modular hoisting assembly being easy to assemble and disassemble to the nacelle of a wind turbine.

It is further an object of the present invention to provide a portable and modular hoisting assembly being arranged for hoisting heavy components up to and down from the nacelle of the wind turbine.

An object of the present invention is to provide a portable and modular hoisting assembly which can be used both in transversal and longitudinal direction of the nacelle.

It is further an object of the present invention to provide a portable and modular hoisting assembly including at least one lifting assembly being fixed or movable in relation to the nacelle.

It is further an object of the present invention to provide a portable and modular hoisting assembly being arranged for transport by ordinary transport means.

It is further an object of the present invention to provide a portable and modular hoisting assembly that provides a safe base for personnel carrying out lifting, rigging, inspection and maintenance operations for a wind turbine.

A further object of the present invention is to provide a portable and modular hoisting assembly which does not involve installing expensive equipment or extensive modifications of the wind turbine.

It is further an object of the present invention to provide a portable and modular hoisting assembly which reduces the costs of maintenance operations of a wind turbine.

An object of the present invention is to provide a portable and modular hoisting assembly which increases the safety of maintenance operations of a wind turbine.

Further objects of the present invention will appear when considering the following description, claims and attached drawings.

### The invention

A portable and modular hoisting assembly according to the present invention is described in claim 1. Preferable features of the portable and modular hoisting assembly are described in the dependent claims.

A wind turbine consists of a tower being safely arranged to the ground and where a nacelle is rotatably arranged at the upper end of the tower. The nacelle holds gearbox, shaft, generator, transformer, etc., and forms a mounting structure for hub and blades.

A portable and modular hoisting assembly (PMHA) according to the present invention includes a frame assembly and at least one lifting assembly which together form a so-called gantry crane to be arranged to the nacelle of the wind turbine, where the frame assembly is arranged inside the nacelle after the roof of the nacelle is partly or entirely removed, utilizing base structure of the nacelle as attachment structure.

The frame assembly is formed by frame elements assembled together to form a gantry with its longitudinal extension in the vertical direction, where the gantry preferably exhibits one open side. Base of the gantry exhibits a size allowing it to be arranged to a nacelle of a wind turbine and the height of the gantry allows heavy components of the wind turbine to be lifted in or out of the nacelle.

The frame assembly forms a supporting structure for arrangement of at least one lifting assembly. At upper end of the frame assembly is arranged at least one, in transversal direction thereof, horizontally extending guiding means for the at least one lifting assembly, where the guiding means have an extension beyond the extension of the frame assembly in transversal direction thereof, and an extension beyond the nacelle, either in longitudinal direction of the nacelle or in transversal direction of the nacelle.

The lifting assembly includes at least one lifting device in the form of a hydraulic or electric winch arranged to a platform, either fixed to the horizontally extending guiding means or movably arranged to the horizontally extending guiding means for movement in the horizontal plane thereof. The at least one lifting device can further be movably arranged to the fixed or movable platform for movement in transversal direction thereof.

The frame assembly can be produced as one unit, but is preferably a modular frame assembly, which can be divided in parts which can be transported in a standard container (ISO container), by standard transport means (train, seagoing vessels or trucks). By transport by road there are often height and width limitations which make it favorable to transport the present invention in standard container to avoid the need for alternate routing to keep the transport costs as low as possible.

Further, the frame assembly can be provided with a detachable, telescopic or foldable extension for the lifting assembly, or that the frame assembly is tiltably arranged in the nacelle, to enable the hub with blades to rotate when the PMHA is arranged to the nacelle in longitudinal direction thereof.

Since the turbines of a wind turbine farm often are of the same type and make, one PMHA can be moved from turbine to turbine, and also to other wind farms with the same turbine type. This will allow for sharing the PMHA and reduce the maintenance and operational costs further.

Accordingly, the present invention uses the structural capacity of the wind turbine tower as base structure, and then adds additional capacity on top to lift out, lower and hoist heavy components of the nacelle. By the present invention, the cost of a heavy external crane is avoided for maintenance operations for the turbine.

The PMHA can be lifted and installed by an internal nacelle crane, a temporary lifting arrangement mounted on the nacelle, or it can be lifted on to the nacelle by using a smaller external ground level crane with a fly jib extension.

Further preferably features and advantageous details will appear from the following example description, claims and attached drawings.

### Example

The present invention will below be described in further detail with references to the attached drawings, where:
Figure 1 shows a general wind turbine according to the state of the art,
Figures 2a-c show a first embodiment of a portable and modular hoisting assembly according to the present invention,
Figures 3a-b show a second embodiment of a portable and modular hoisting assembly according to the present invention,
Figures 4a-b show two embodiments of a lifting assembly according to the present invention,
Figures 5a-c show a portable and modular hoisting assembly where the lifting assembly includes a monorail lifting device,
Figures 6a-d show examples of use of a portable and modular hoisting assembly according to the present invention,
Figures 7a-b show a further embodiment of a frame assembly provided with a foldable extension, and
Figures 8a-b show examples of arrangement of tension support means to a distal end of the frame assembly according to the present invention.

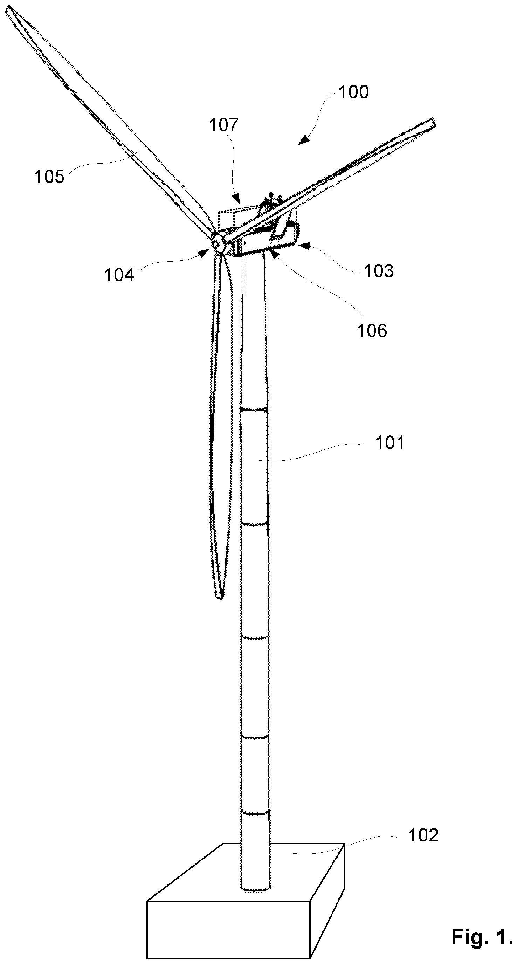

Reference is now made to Figure 1 which shows a general wind turbine 100 including a tower 101 secured to the ground by means of casting 102 or similar. The wind turbine 100 includes at upper end of the tower 101 a rotatably arranged nacelle 103 which holds components of the energy generating means for the wind turbine 100, such as gearbox, shaft, generator, transformer etc. The nacelle 103 further forms a supporting structure for hub 104 and blades 105, also known as base structure 106. The present invention is especially related to a wind turbine 100 including a nacelle 103 provided with a partly or entirely movable or detachable roof 107, as indicated by dotted lines in Figure 1. The further description herein will be related to a nacelle 103 where the roof 107 is removed.

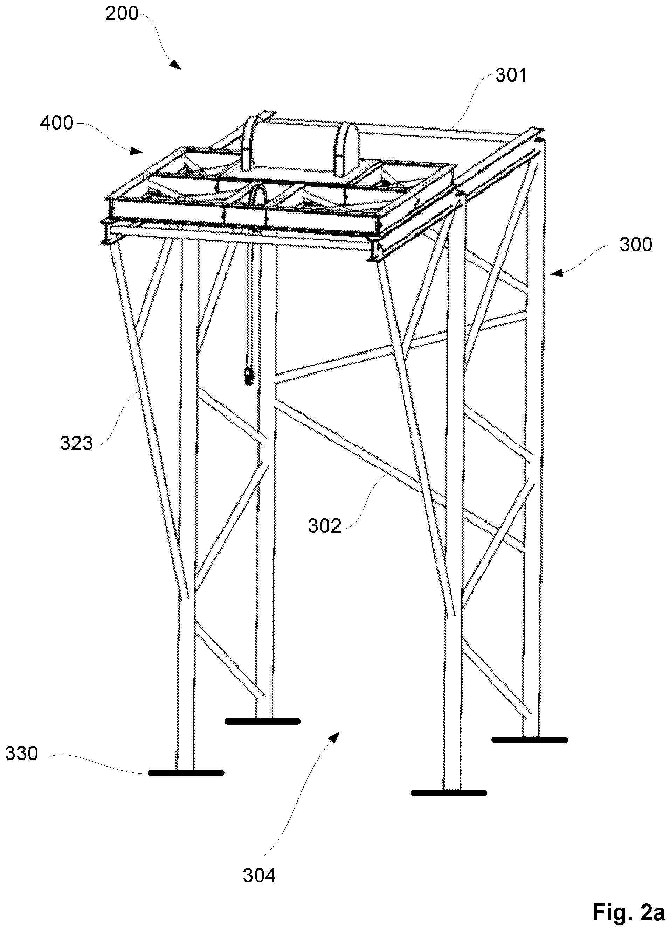

Reference is now made to Figure 2a-c which show principle drawings of a first embodiment of portable and modular hoisting assembly (PMHA) 200 according to the present invention, including a frame assembly 300 and at least one lifting assembly 400.

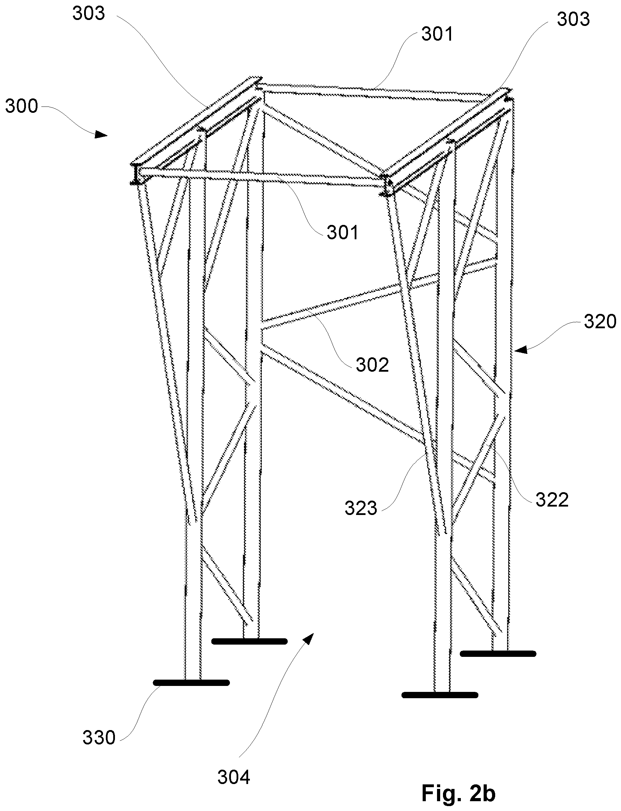

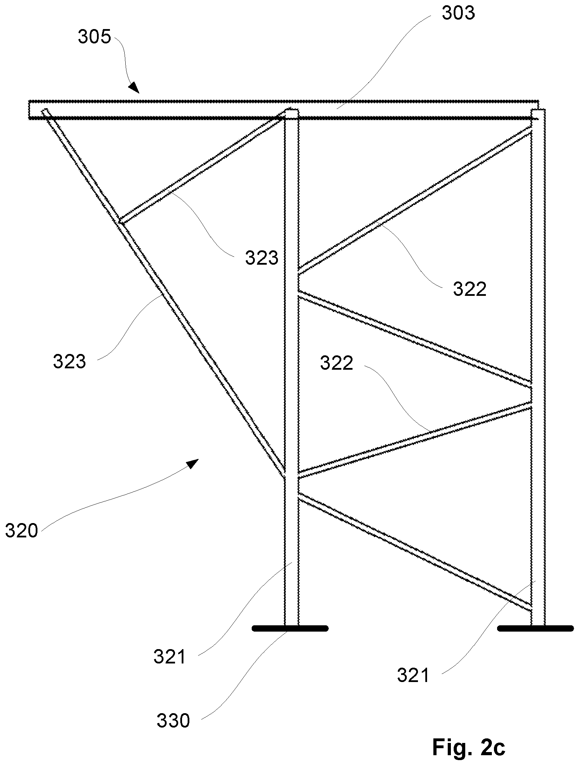

In Figure 2b are shown details of the frame assembly 300 of the PMHA 200. The frame assembly 300 exhibits a mainly rectangular shape with the longitudinal direction thereof extending in vertical direction. The frame assembly 300 according to the shown example is formed by two vertical extending similar side structures 320, as shown in detail in Figure 2c, which are connected together by horizontally extending bars 301 at their upper ends, and is further at one of the longitudinal sides connected by inclined bars 302 arranged therebetween. The side structures 320 are formed by two vertically extending rods 321 spaced apart, which at their upper ends are connected by horizontally extending beams 303, which in this embodiment also has a function as guiding means (will also be referred to as guiding means hereinafter) for a lifting assembly 400, and at least one reinforcing inclined bar 322 extending between the two vertically extending rods 321 along the longitudinal direction of the vertical extending rods 321. When the two side structures 320 are assembled together by the horizontally extending bars 301 and the at least one reinforcing inclined bars 302, the frame assembly 300 exhibit a shape where one side 304 of the mainly rectangular frame assembly 300 is open.

The horizontally extending beams 303, e.g. a T-bar, are arranged so that they have an extension 305 going beyond the extension of the mainly rectangular frame assembly 300, at the open side 304 of the frame assembly 300. It is further preferably arranged inclined reinforcing bars 323 between the horizontally extending beams 303 at the part of the horizontally extending beams 303 extending beyond the side structures 320, which inclined reinforcing bars 323 are arranged to the vertical rod 321 facing the extension 305 of the horizontally extending beams 303.

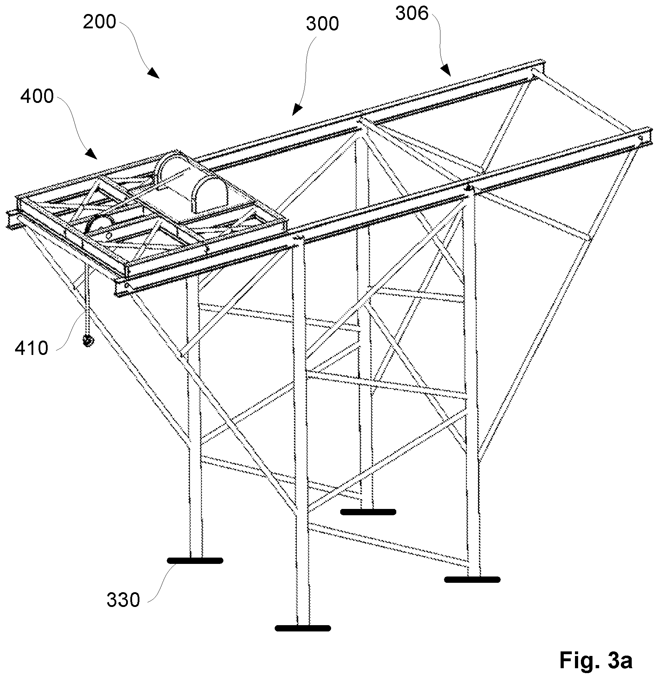

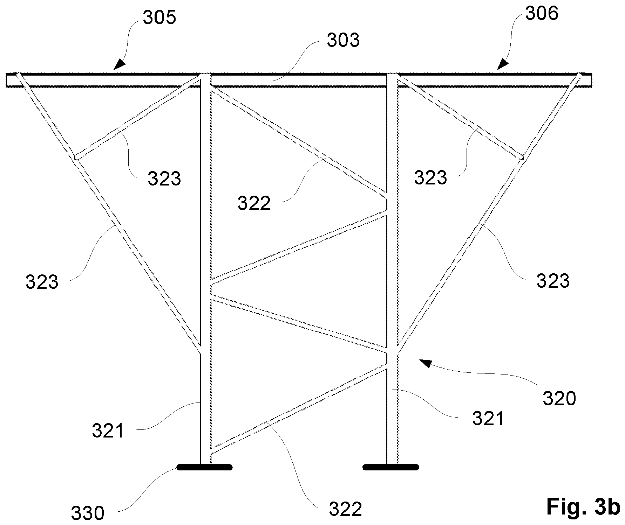

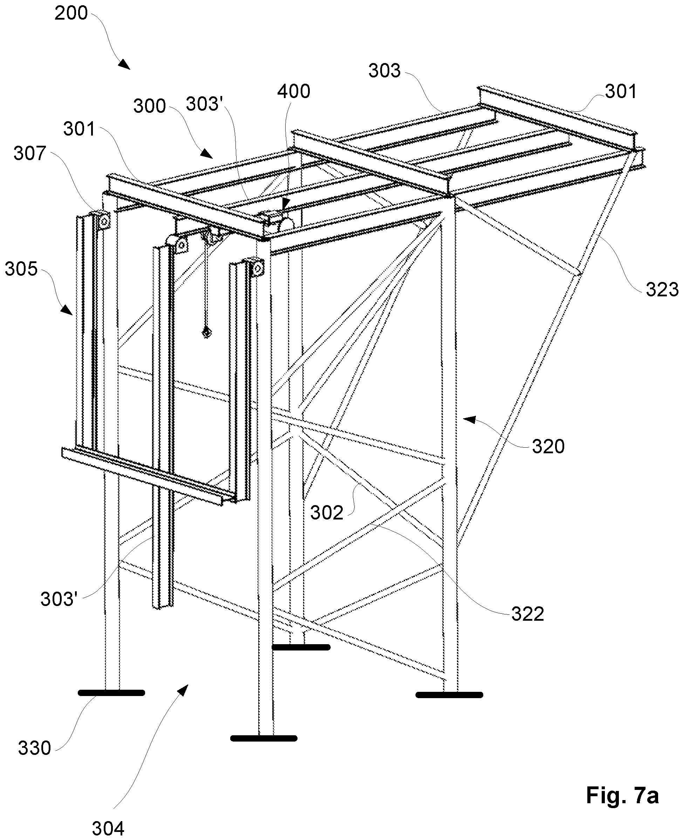

In an alternative frame assembly 300, as shown in Figures 3a-b, the horizontally extending beams 303 also have an extension 306 to the opposite side of the frame assembly 300, for forming an anchoring point for a tension support wire or bar which are attached to a grounding point at the other end; e.g. the tower 101, as shown in Figure 7a-b, tower base or some other fixed or mobile grounding point at the ground. As in Fig. 2a-c, the extension 306 to the other side will also be provided with reinforcing inclined bars 323 as the extension 305.

It should further be mentioned that the reinforcing inclined bars 302 and/or 322 preferably are detachably arranged to the vertical rods 321 allowing them to be removed and inserted again in a simple manner, e.g. in a lifting operation requiring turning of a component having a longer length than available inside the frame assembly 300. In such a situation one or more reinforcing inclined bars 302/322 can be removed to allow the component to extend out of the frame assembly during a turning operation.

The frame assembly 300 is further provided with fastening means 330, such as brackets, for detachable fastening to a base structure 106 of the nacelle 103. The fastening means 330 can further be adjustable in vertical direction, horizontal direction or both to facilitate the arrangement to the nacelle 103 base structure 106. Alternatively, the fastening means 330 can be manufactured in two parts forming a quick-connection, where one part can be arranged to the base structure 106 of the nacelle 103 in advance, so that the frame assembly more rapidly can be assembled.

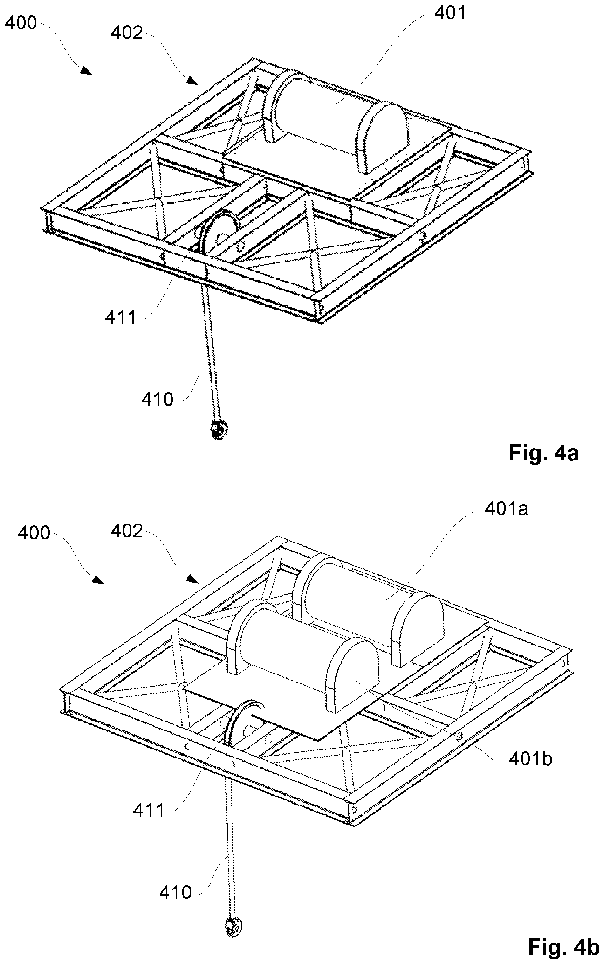

Reference is now made to Figures 4a-b showing an example of a lifting assembly 400. The lifting assembly includes at least one lifting device 401 in the form of an electric or hydraulic winch which is arranged to a fixed or movable platform 402, arranged to the horizontally extending beams/guiding means 303. In Figure 4b it is shown an embodiment of a lifting assembly 400 including two lifting devices 401a-b arranged to the platform 402. Lifting wire 410 of the lifting assembly can further be run over a fixed or movable pulley 411 arranged to the fixed or movable platform 402. E.g. the pulley 411 can be arranged movable in the form of a telescopic beam.

Hub 104 and blade 105 changes normally require the use of two cranes; one that lowers the blade 105 or hub 104 with blades 105, and one crane to change the orientation of the blade 105/hub 104 from the vertical position to the horizontal position before it is lowered to the ground.

By employing more than one lifting device 401a-b (winches) to the PMHA 200, this operation can be done by the PMHA 200 alone, without the use of an external movable crane. E.g. for lowering a blade 105, one lifting device 401a (winch) is fixed by a wire on the lower side of COG (Center of gravity) of the blade 105, whilst another lifting device 401b (winch) is fixed to the hub-end of the blade 105. By this arrangement, the blade 105 can change position from the vertical state to a horizontal state when lowering, without the blade 105 touching ground, eliminating the need for an external movable crane to facilitate this operation. By re-installation, the operation is reversed.

As mentioned, the platform 402 can be movably arranged for movement along the horizontally extending beams/guiding means 303, but in addition the lifting device(s) 401/401a-b can be arranged movable in transversal direction of the platform 402 such that the lifting assembly 400 as hole provides movement in both directions. Powering means of the lifting device 401, 401a-b can be arranged externally of the lifting assembly 400 or carried by the platform 402. Further, moving means for movement of a movable platform 402 are preferably carried by the platform 402.

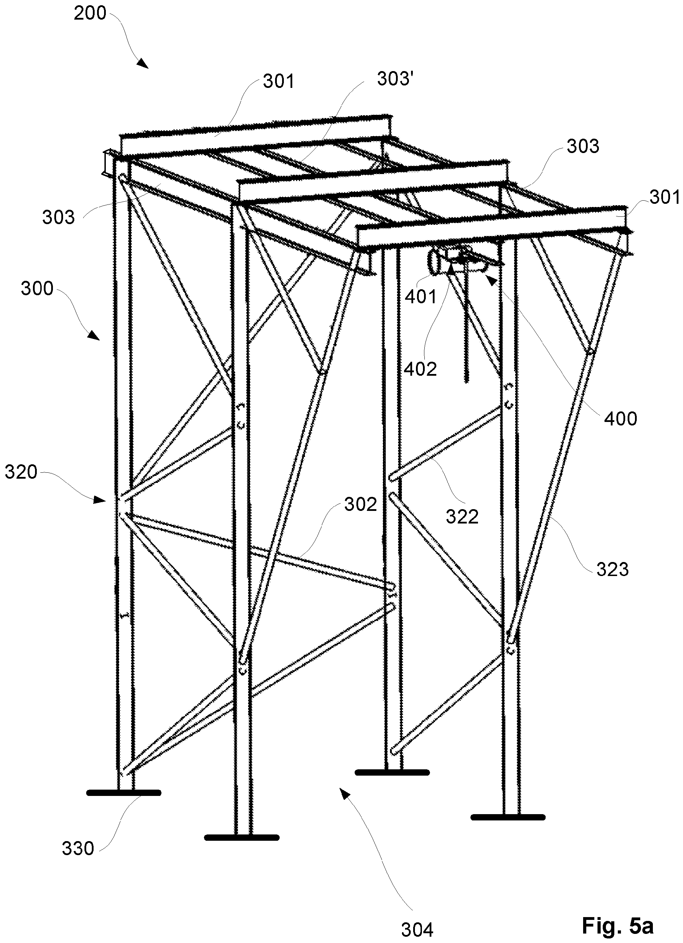

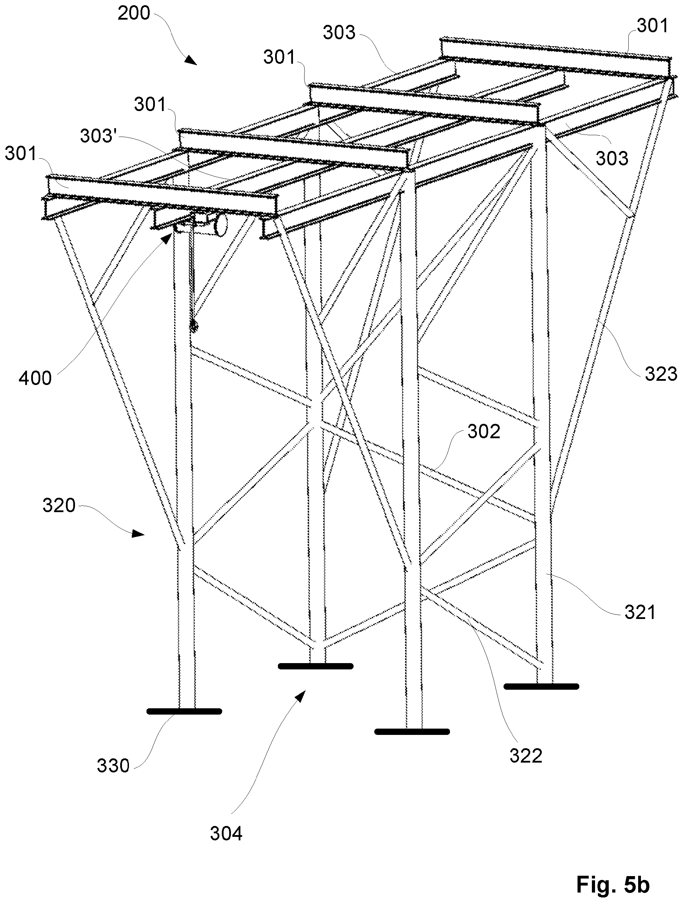

Reference is now made to Figures 5a-c showing another embodiment of the PMHA 200 according to the present invention in the form of a monorail lifting assembly 400. In this embodiment the frame assembly 300 is mainly formed as for the embodiments described above, but here the horizontally extending bars 301 are arranged at the upper side of the horizontally extending beams 303, preferably arranged at both ends of the horizontally extending beams 303 and over corresponding vertically extending rods 321 for the two side structures 320. The frame assembly 300 further includes a third horizontally extending beam 303', arranged in the middle of the horizontally extending beams 303 of the side structures 320 and connected to the horizontally extending bars 301 for forming a guiding means for arrangement of a fixed or movable platform 402 of the lifting assembly 400. Figure 5a shows the use of a frame assembly 300 with extension in one direction as the frame assembly in Figure 2a-c, while Figure 5b shows the use of a frame assembly 300 with extension on both directions as the frame assembly in Figure 3a-b.

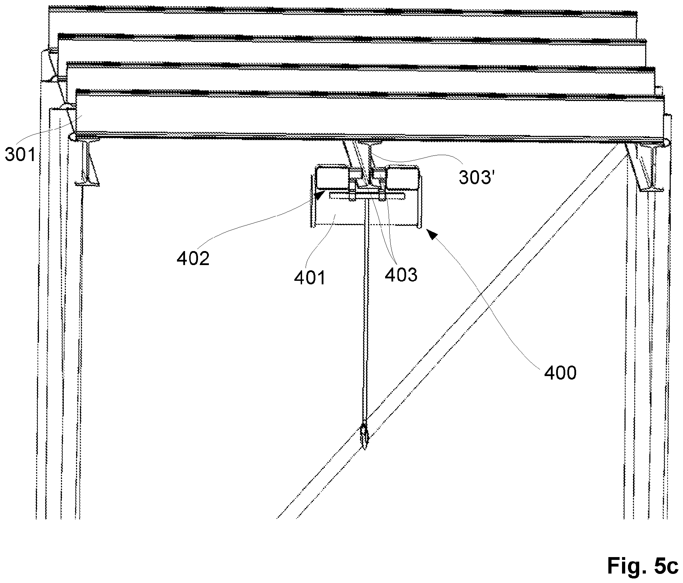

Figure 5c shows a closer view of the lifting assembly 400, revealing details of the arrangement of a movable platform 402 to the guiding means 303', i.e. the horizontally extending beam 303'. The movable platform 402 can e.g. be a traverse carrier including two driving wheels 403 which are arranged to the horizontally extending beam 303' by means of the two driving wheels 403 engaging the horizontally extending beam 303' from both sides. In this way the lifting assembly 400 will be movably arranged to the frame assembly 300. The same principles as shown in Figure 5c and described above can be utilized for arranging a movable platform 402 in Figures 2a, 4a-b to the guiding means/horizontally extending beams 303, i.e. to both of the guiding means/horizontally extending beams 303.

It should further be noted that also the monorail lifting assembly 400 can include more than one lifting device 401, based on the same principle as described for Figure 4b. Further, also the monorail lifting assembly 400 can be fixed to the guiding means/horizontally extending beams 303. Further, as shown in 6d and 7b, the movable platform of the monorail lifting assembly 400 can be provided with an extension 412 where a pulley 411 is arranged at end of the extension 412 to displace the lifting point in horizontal direction. Also in this embodiment the pulley 411 can be movably arranged by that the extension 412 e.g. is a telescopic beam.

The assembly of the PMHA 200 according to the present invention is performed by that the roof 107 of the nacelle 103 is partly or entirely removed. The PMHA 200 is next lifted in parts/sections by an internal nacelle crane, a temporary lifting arrangement mounted on the nacelle 103, or it can be lifted on to the nacelle 103 by using a smaller external ground level crane with a fly jib extension as one unit or in parts/sections. It should further be mentioned that the PMHA 200 can also be divided in further parts, i.e. the number of parts and size and weight of the parts are so low that they can be transported via an internal elevator positioned in the tower of the wind turbine. The PMHA 200 can then be assembled part by part at the nacelle. However, the further description will be related to the use of an external ground level crane positioned at the bottom of the wind turbine 100 and where this external ground level crane is used to lift the frame assembly in parts as described in Figures 2a-c, 3 and 4, 5a-c or as one unit assembled at the ground.

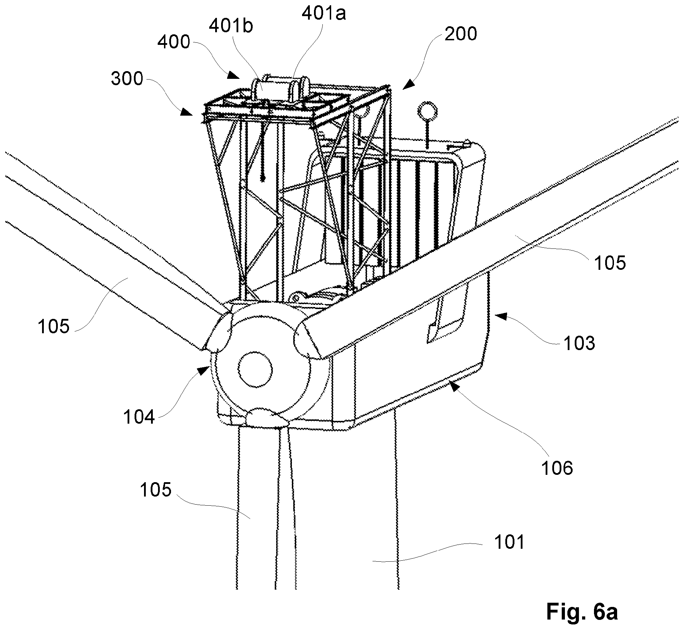

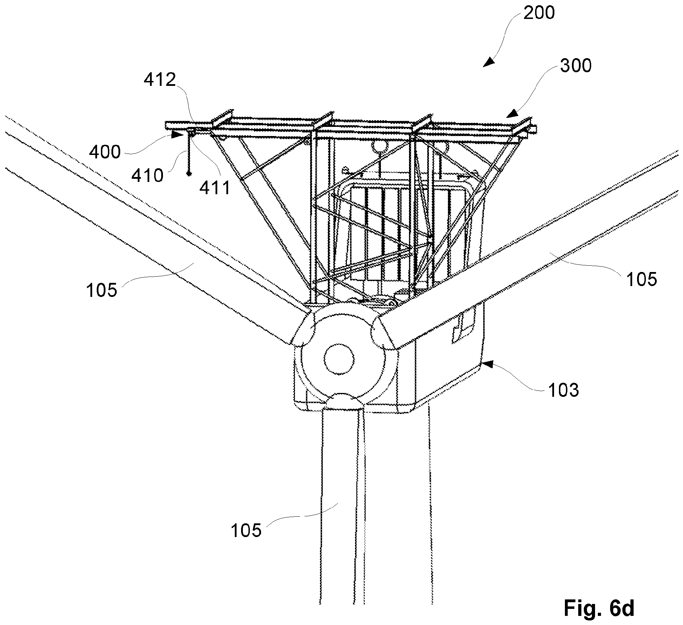

The use of the PMHA 200 according to the present invention will now be described with references to Figures 6a-d and 7a-b, showing the use of all the above described embodiments in different operations.

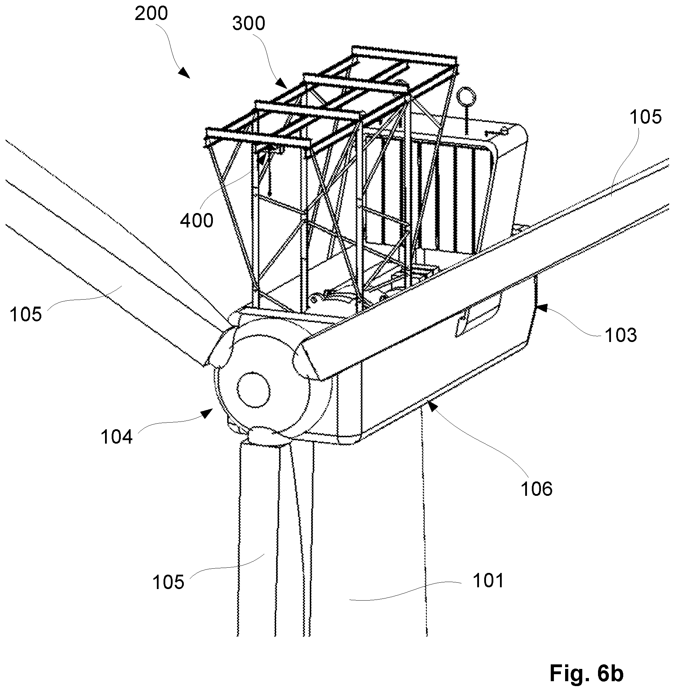

In Figures 6a-b are shown a first use of the present invention where the PMHA 200 is arranged in the longitudinal direction of the nacelle 103 and extending beyond the front part of the nacelle 103. Figure 6a show the use of a frame assembly 300 with extension 305 only in one direction and where the lifting assembly 400 includes two lifting devices 401a-b, while Figure 6b show a frame assembly 300 with extensions in both direction 305 and 306 and where the lifting assembly 400 includes one lifting device 401 in the form of the monorail lifting assembly 400. The lifting assembly 400 can by means of the lifting devices 401, 401-b lower or lift a blade 105 or hub 104 of the wind turbine 100, possibly also the hub 104 and one or more blades 105 as one unit.

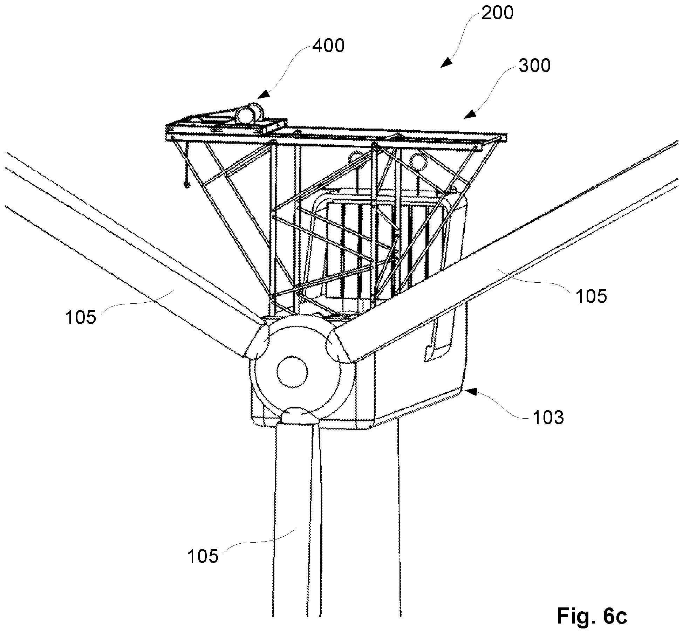

In Figures 6c-d are shown a second use of the present invention where the PMHA 200 is arranged in the transversal direction of the nacelle 103 and extending beyond the longitudinal side of the nacelle 103 for lowering or lifting a component, such as gearbox, generator, shaft, transformer, etc. which are positioned in the nacelle 103. By means of the lifting device 401, the component can be lifted up in the nacelle 103, moved to a position outside the nacelle 103 by means of the movable platform 402 or movable pulley 411 and then lowered to the ground. In the opposite case, a component can be lifted up from the ground by the lifting device 401 to a position outside the nacelle 103, and then moved into the nacelle by the movable platform 402 or movable pulley 411 and then lowered into position by means of the lifting device 401.

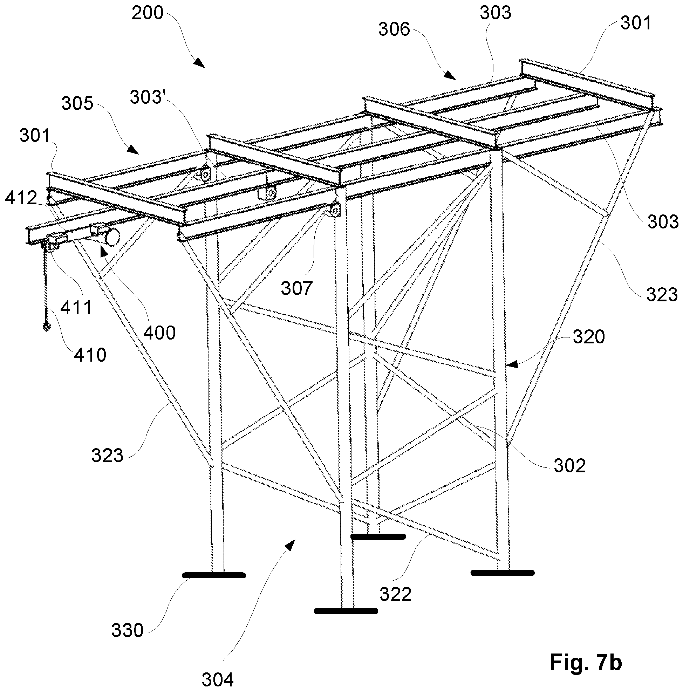

Reference is now made to Figures 7a-b showing a further embodiment of PMHA 200 according to the present invention. In the situations as described in Figures 6a-b the PMHA 200 will extend between the blades 105 which are positioned in a Y-formation. In this situation it will be preferable that the PMHA 200 provides opportunities for temporarily demounting or tilting the PMHA 200 such that the hub 104 with blades 105 can be turned freely, so that one in this way can exchange all the blades 105 without demounting the PMHA 200 partly or entirely for each blade 105 operation. This can e.g. be solved by that the extension 305 of the PMHA 200 is arranged demountable or foldable, the extension 305 is telescopic or that the entire PMHA 200 can be tilted back to clear passage for the blades 105. By this the PMHA 200 in a simple manner will be retracted such that the blades freely can rotate. In Figure 7a-b it is shown a solution where the extension 305 is arranged to the frame assembly 300 by hinges 307 enabling folding the extension 305 along the end side of the frame assembly 300 after removing the inclined bars 323. In Figure 7a it is shown a position where the extension 305 is folded down providing a free path for the blades 105, while Figure 7b shows a position where the extension 305 is folded up and in position for exchanging blades 105. Further, in the shown example the horizontally extending beam 303' which the lifting device 401 is arranged to exhibits an extension beyond the extension 305 of the frame assembly 300 to allow the lifting device 401 to be positioned even further out from the nacelle. In this way one, when one need to rotate the hub 104 with blades 105, the inclined bars 323 are disassembled from the frame assembly 300 and the extension 305 is folded down, the hub 104 with blades 105 is rotated to arrange the blades 105 in a different position (Y-position), and the extension 305 is folded up again and the inclined bars 323 are rearranged to the frame assembly 300 and the PMHA 200 is again ready for operation.

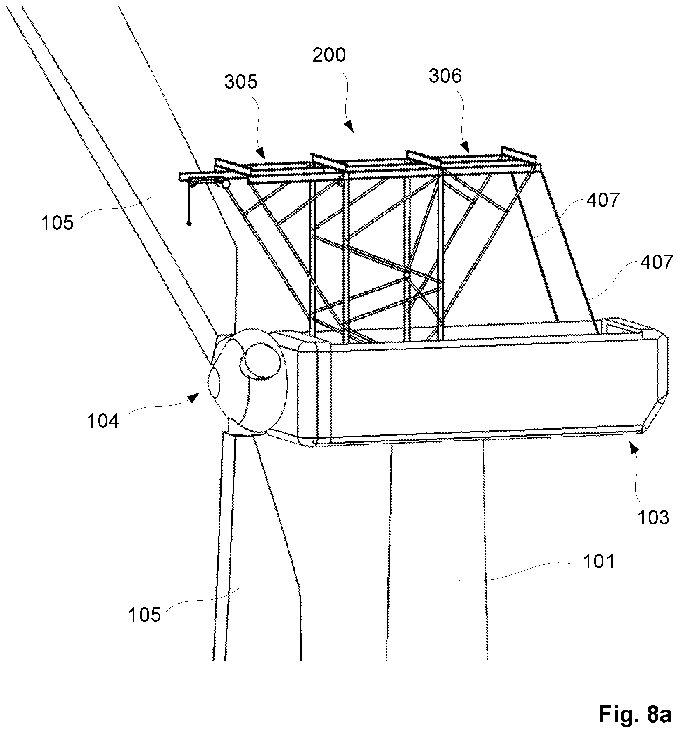

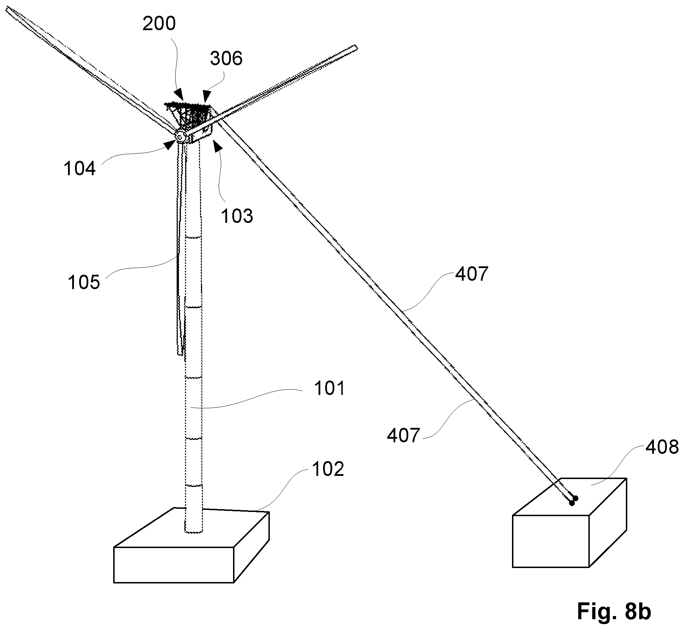

In Figures 8a-b are shown similar situations as described in Figures 6b and 6c-d where the frame assembly 300 also includes an extension 306 in the other direction, and where it in addition is arranged one or more tension support wires 407 or bars extending from the extension 306 and is fixed to an anchoring point in the nacelle 103, as shown in Figure 8a (parts of the nacelle 103 and one blade 105 is removed for clarity in the figure), or are extending to ground where the wires 407 are fixed to an external anchoring point 408, such as a weight, as shown in Figure 8b.

Accordingly, the present invention provides a portable and modular hoisting assembly for a wind turbine which has the following advantages over prior art:
- The assembly is easy to transport due to it is modular and can be transported by means of an ISO-container.
- The assembly removes the need for heavy weight external ground level cranes which otherwise are required for replacing heavy components of a wind turbine.
- The assembly is cost-reducing, as the need for costly heavy external ground level cranes are not needed in a maintenance/exchange operation. I.e. by using an external ground level crane with lower properties, the costs of the operation will be considerably lower.
- The assembly is rapid to assemble and disassemble, reducing the time needed to perform a heavy lift operation, resulting in reduced costs for the operation.
- The assembly provides a secure and stable hoisting assembly for heavy lift operations.

The present invention also has other use areas than the above described examples. When the PMHA 200 already is at place in the nacelle 103, the PMHA 200 can also be used for maintenance of other structures of the wind turbine by arranging suitable equipment to the lifting device. By e.g. arranging a basket to the lifting device personnel can be hoisted up and down along the tower or blades and performing inspection, repair, cleaning and painting of both tower and blades.

Below will be given an example of costs saved by using the PMHA 200 according to the present invention in relation to the use of a heavy weight crane.

For the comparison of crane size we name a small mobile crane as example make; Liebherr LTM 1350-6.1 has a lifting capacity of approx. 5 tons for a nacelle at a 80 to 90 meters high turbine tower. This capacity is not enough to lift out the heavy components of the turbine, however the lifting capacity is sufficient to lift the modules of the PMHA according to the present invention.

In order to lift the heavy components of the turbine, a much heavier crane has to be used. A typical crane for this application is the Liebherr LR 1600-2 crawler crane. This crane is heavy weight and has to be transported in sections on special carriers, and assembled on site.

A LTM 1350 crane has an axle load of 12 tons and an agile turning radius of 7 meters that enables this crane to be used on small rural roads with axle load limitations, without special arrangements. This enables fast mobilization for maintenance, compared to using the traditional large crane.

The difference in crane mobilization and rental costs are significant, thus the PMHA according to the present invention represents a much more cost and time efficient method for safe change out of heavy components. The difference in mobilization costs only at the coast of Norway for the two crane alternatives is in the range of NOK 1000 000. A total cost reduction in the range of NOK 750 000 (USD 100000) is assumed per event for the application of the PMHA according to the present invention, which show the cost efficiency of the present invention. The above costs does not include cost savings related to standby crane rental costs for time waiting on weather, which is common for crane operations as operations as blade exchange require very low wind conditions. Including standby costs may enhance the cost savings estimates in the range of an additional NOK 1000 000. For offshore wind farm sites, the cost advantage of the PMHA according to the present invention can be at the range of up to 20 times the advantage onshore, as crane vessel rental and mobilization rates increases with size and can range from NOK 1500 000 to NOK 4 600 000 per day on a 20 days spot price summer lease, dependent on vessel size.

Further, during installation of a wind park, the PMHA according to the present invention can be arranged to the nacelle prior to arrangement of the nacelle to the wind turbine tower. In this way a large crane can be used to lift the nacelle with the PMHA arranged for then to move to the next wind turbine tower. The PMHA can then be used to lift and arrange one and one rotor blade to the rotor. There will be both time and economic savings by this approach as one then does not need the large crane for lifting of rotor blades and one can thus build the wind park more rapid.

### Modifications

The frame assembly can be provided with access ladders for observation or safe entry to service basket.

The frame assembly and lifting assembly can be provided with cameras for remote control.

The lifting device(s) can be arranged for remote control.

The lifting device(s) can be provided with motion control, heave compensation or sway control.

The tension support wires can be provided with active load control.

The more than one lifting assemblies can be provided with electronic synchronization.

The frame assembly can be provided with alignment tools, e.g. laser reflectors.

The base of the frame assembly can be provided with adjustable sockets.

The extension 306 can also be detachable, foldable or telescopic arranged to the frame assembly, as described for the extension 305 in Figures 7a-b.

## Claims

1. Portable and modular hoisting assembly (200) for a wind turbine (100) for hoisting heavy components, such as blades, hub, gearbox, generator, transformer, shaft, etc., of the wind turbine (100), the hoisting assembly (200) being arranged for detachable arrangement to the wind turbine (100) and including at least one lifting assembly (400), wherein the wind turbine (100) includes a fully or partly detachable or movable roof (107), wherein the hoisting assembly (200) includes:
- a frame assembly (300) for detachable arrangement to a base structure (106) interior of a nacelle (103) of the wind turbine (100), with horizontally extending beams (303, 303') arranged at upper end of the frame assembly (300), which horizontally extending beams (303,303') have an extension (305) extending beyond the frame assembly (300), in transversal direction thereof, and extending in use beyond the nacelle (103) in either transversal or longitudinal direction thereof, and
- the at least one lifting assembly (400) is fixed to the horizontally extending beams (303, 303'), or movably arranged to the horizontally extending beams (303, 303') for movement in longitudinal or transversal direction of the nacelle (103),
**characterized in that** the lifting assembly (400) includes a fixed or movable platform (402) arranged to the horizontally extending beams (303, 303') and at least one lifting device (401, 401a-b) arranged to the platform (402).

2. Hoisting assembly according to claim 1, **characterized in that** the frame assembly (300) is formed by two vertically extending side structures (320) connected together by horizontally extending bars (301) at their upper ends and is further at one of longitudinal sides connected by at least one inclined bar (302) extending therebetween.

3. Hoisting assembly according to claim 2, **characterized in that** the side structures (320) are formed by two vertically extending rods (321), spaced apart, which at their upper end is connected by the horizontally extending beams (303), and is further connected by inclined bars (322) extending between the vertically extending rods (321).

4. Hoisting assembly according to claim 1, **characterized in that** the horizontally extending beams (303, 303') also have an extension (306) beyond the frame assembly (300) in the opposite direction of the extension (305) for providing an anchoring point for one or more tension support wires (407) or bars for attachment to the nacelle (103) or an external anchoring point (408).

5. Hoisting assembly according to claim 4, **characterized In that** inclined bars (323) are arranged between the extensions (305, 306) and the vertically extending rods (321) facing the respective extensions (305, 306).

6. Hoisting assembly according to claim 5, **characterized in that** the bars (302, 322, 323) are detachably arranged to the vertically extending rods (321).

7. Hoisting assembly according to any one of the preceding claims, **characterized in that** the extension (305) is detachably or foldably arranged to the frame assembly (300), that the extension (305) entirely or partly is telescopic arranged to the frame assembly (300), or that the frame assembly (300) is arranged tiltable in relation to the nacelle (103).

8. Hoisting assembly according to claim 1, **characterized in that** the frame assembly (300) is provided with fasting means (330) for detachable arrangement to the base structure (106).

9. Hoisting assembly according to claim 1, **characterized in that** the lifting device (401, 401a-b) is/are arranged movably in relation to the platform (402).

10. Hoisting assembly according to claim 1, **characterized in that** the movable platform (402) is provided with wheels (403) which are arranged to the horizontally extending beams (303, 303') by means of the wheels (403) engaging the horizontally extending beams (303, 303') from one or both sides.

11. Hoisting assembly according to claim 1, **characterized in that** the fixed or movable platform (402) is provided with a fixed or movable pulley (411) for a lifting wire (410) horizontally displaced in relation to the lifting device (401).

12. Hoisting assembly according to claim 1, **characterized in that** the frame assembly (200) is divided in parts which can be transported in a standard ISO container.

## Patentansprüche

1. Tragbare und modulare Hebeanordnung (200) für eine Windkraftanlage (100) zum Heben von schweren Bauteilen, wie Schaufeln, Nabe, Getriebe, Generator, Transformator, Welle usw. der Windkraftanlage (100), wobei die Hebeanordnung (200) zum lösbaren Anordnen an der Windkraftanlage (100) angeordnet ist und mindestens eine Hubanordnung (400) einschließt, wobei die Windkraftanlage (100) ein vollständig oder teilweise lösbares oder bewegliches Dach (107) einschließt, wobei die Hebeanordnung (200) Folgendes einschließt:
- eine Rahmenanordnung (300) zum lösbaren Anordnen an einer Grundstruktur (106) im Inneren einer Gondel (103) der Windkraftanlage (100) mit sich horizontal erstreckenden Trägern (303, 303'), die an dem oberen Ende der Rahmenanordnung (300) angeordnet sind, wobei die sich horizontal erstreckenden Träger (303, 303') eine Verlängerung (305) aufweisen, die sich in Querrichtung über die Rahmenbaugruppe (300) hinaus erstreckt und sich im Gebrauch in Quer- oder Längsrichtung über die Gondel (103) hinaus erstreckt, und
- die mindestens eine Hubanordnung (400) an den sich horizontal erstreckenden Trägern (303, 303') befestigt ist oder zur Bewegung in Längs- oder Querrichtung der Gondel (103) beweglich an den sich horizontal erstreckenden Trägern (303, 303') angeordnet ist,
**dadurch gekennzeichnet, dass** die Hubanordnung (400) eine feste oder bewegliche Plattform (402), die an den sich horizontal erstreckenden Trägern (303, 303') angeordnet ist, und mindestens eine Hubvorrichtung (401, 401a-b), die an der Plattform (402) angeordnet ist, einschließt.

2. Hebeanordnung nach Anspruch 1, **dadurch gekennzeichnet, dass** die Rahmenanordnung (300) durch zwei sich vertikal erstreckende Seitenstrukturen (320) ausgebildet ist, die an ihren oberen Enden durch sich horizontal erstreckende Stangen (301) miteinander verbunden sind und ferner an einer von Längsseiten durch mindestens eine sich dazwischen erstreckende geneigte Stange (302) verbunden sind.

3. Hebeanordnung nach Anspruch 2, **dadurch gekennzeichnet, dass** die Seitenstrukturen (320) durch zwei voneinander beabstandete sich vertikal erstreckende Stäbe (321) ausgebildet sind, die an ihrem oberen Ende durch die sich horizontal erstreckenden Träger (303) verbunden sind und die ferner durch geneigte Stangen (322), die sich zwischen den sich vertikal erstreckenden Stäben (321) erstrecken, verbunden sind.

4. Hebeanordnung nach Anspruch 1, **dadurch gekennzeichnet, dass** die sich horizontal erstreckenden Träger (303, 303') ebenso eine Verlängerung (306) über die Rahmenanordnung (300) hinaus in der entgegengesetzten Richtung der Verlängerung (305) aufweisen, um einen Verankerungspunkt für einen oder mehrere Spanndrahthalter (407) oder Stangen zur Befestigung an der Gondel (103) oder einen externen Verankerungspunkt (408) bereitzustellen.

5. Hebeanordnung nach Anspruch 4, **dadurch gekennzeichnet, dass** geneigte Stangen (323) zwischen den Verlängerungen (305, 306) und den sich vertikal erstreckenden Stäben (321) angeordnet sind, die den entsprechenden Verlängerungen (305, 306) zugewandt sind.

6. Hebeanordnung nach Anspruch 5, **dadurch gekennzeichnet, dass** die Stangen (302, 322, 323) lösbar an den sich vertikal erstreckenden Stäben (321) angeordnet sind.

7. Hebeanordnung nach einem der vorhergehenden Ansprüche, **dadurch gekennzeichnet, dass** die Verlängerung (305) lösbar oder klappbar an der Rahmenanordnung (300) angeordnet ist, dass die Verlängerung (305) ganz oder teilweise ausfahrbar an der Rahmenanordnung (300) angeordnet ist, oder dass die Rahmenanordnung (300) in Bezug auf die Gondel (103) kippbar angeordnet ist.

8. Hebeanordnung nach Anspruch 1, **dadurch gekennzeichnet, dass** die Rahmenanordnung (300) mit Befestigungsmitteln (330) zum lösbaren Anordnen an der Grundstruktur (106) versehen ist.

9. Hebeanordnung nach Anspruch 1, **dadurch gekennzeichnet, dass** die Hubvorrichtung (401, 401a-b) relativ zur Plattform (402) beweglich angeordnet ist/sind.

10. Hebeanordnung nach Anspruch 1, **dadurch gekennzeichnet, dass** die bewegliche Plattform (402) mit Rädern (403) versehen ist, die an den sich horizontal erstreckenden Trägern (303, 303') mittels der Räder (403) angeordnet sind, die die sich horizontal erstreckenden Träger (303, 303') von einer oder von beiden Seiten in Eingriff nehmen.

11. Hebeanordnung nach Anspruch 1, **dadurch gekennzeichnet, dass** die feste oder bewegliche Plattform (402) mit einer festen oder beweglichen Riemenscheibe (411) für einen Hubdraht (410) versehen ist, der in Bezug auf die Hebevorrichtung (401) horizontal versetzt ist.

12. Hebeanordnung nach Anspruch 1, **dadurch gekennzeichnet, dass** die Rahmenanordnung (200) in Teile unterteilt ist, die in einem Standard-ISO-Container transportiert werden können.

## Revendications

1. Ensemble de hissage portable et modulaire (200) pour une éolienne (100) destiné à hisser des composants lourds, tels que des pales, un moyeu, une boîte de vitesses, un générateur, un transformateur, un arbre, etc., de l'éolienne (100), l'ensemble de hissage (200) étant agencé de manière à pouvoir se détacher de l'éolienne (100) et comportant au moins un ensemble de levage (400), dans lequel l'éolienne (100) comporte un toit totalement ou partiellement amovible ou mobile (107), dans lequel l'ensemble de hissage (200) comprend :
- un ensemble cadre (300) destiné à être agencé de manière amovible sur une structure de base (106) à l'intérieur d'une nacelle (103) de l'éolienne (100), avec des poutres s'étendant horizontalement (303, 303') agencées à l'extrémité supérieure de l'ensemble cadre (300), dont les poutres s'étendant horizontalement (300, 303') comprennent une extension (305) s'étendant au-delà de l'ensemble cadre (300), dans la direction transversale de celui-ci, et s'étendant, lors de l'utilisation, au-delà de la nacelle (103) dans la direction transversale ou longitudinale de celle-ci, et
- l'au moins un ensemble de levage (400) est fixé aux poutres s'étendant horizontalement (303, 303'), ou agencé de manière mobile sur les poutres s'étendant horizontalement (303, 303') pour un mouvement dans la direction longitudinale ou transversale de la nacelle (103), **caractérisé en ce que** l'ensemble de levage (400) comporte une plate-forme fixe ou mobile (402) agencée sur les poutres s'étendant horizontalement (303, 303') et au moins un dispositif de levage (401, 401a-b) agencé sur la plate-forme (402).

2. Ensemble de hissage selon la revendication 1, **caractérisé en ce que** l'ensemble cadre (300) est formé de deux structures latérales s'étendant verticalement (320) reliées ensemble par des barres s'étendant horizontalement (301) à leurs extrémités supérieures et se trouvant en outre sur l'un des côtés longitudinaux reliés par au moins une barre inclinée (302) s'étendant entre eux.

3. Ensemble de hissage selon la revendication 2, **caractérisé en ce que** les structures latérales (320) sont formées par deux tiges s'étendant verticalement (321), espacées l'une de l'autre, qui sont reliées à leur extrémité supérieure par les poutres s'étendant horizontalement (303), et sont en outre reliées par des barres inclinées (322) s'étendant entre les tiges s'étendant verticalement (321).

4. Ensemble de hissage selon la revendication 1, **caractérisé en ce que** les poutres s'étendant horizontalement (303, 303') présentent également une extension (306) au-delà de l'ensemble cadre (300) dans la direction opposée de l'extension (305) pour fournir un point d'ancrage pour un ou plusieurs câbles (407) de support de tension ou barres pour la fixation à la nacelle (103) ou à un point d'ancrage externe (408).

5. Ensemble de hissage selon la revendication 4, **caractérisé en ce que** des barres inclinées (323) sont agencées entre les extensions (305, 306) et les tiges s'étendant verticalement (321) faisant face aux extensions (305, 306) respectives.

6. Ensemble de hissage selon la revendication 5, **caractérisé en ce que** les barres (302, 322, 323) sont agencées de manière amovible sur les tiges s'étendant verticalement (321).

7. Ensemble de hissage selon l'une quelconque des revendications précédentes, **caractérisé en ce que** l'extension (305) est agencée de manière amovible ou pliable sur l'ensemble cadre (300), **en ce que** l'extension (305) est entièrement ou partiellement télescopique agencée au niveau de l'ensemble cadre (300), ou **en ce que** l'ensemble cadre (300) est agencé de manière à pouvoir basculer par rapport à la nacelle (103).

8. Ensemble de hissage selon la revendication 1, **caractérisé en ce que** l'ensemble cadre (300) est pourvu de moyens de fixation (330) pour un agencement amovible sur la structure de base (106).

9. Ensemble de hissage selon la revendication 1, **caractérisé en ce que** le dispositif de levage (401, 401a-b) est agencé de manière mobile par rapport à la plate-forme (402).

10. Ensemble de hissage selon la revendication 1, **caractérisé en ce que** la plate-forme mobile (402) est pourvue de roues (403) qui sont agencées sur les poutres s'étendant horizontalement (303,303') au moyen des roues (403) entrant en prise avec les poutres s'étendant horizontalement (303, 303') d'un ou des deux côtés.

11. Ensemble de hissage selon la revendication 1, **caractérisé en ce que** la plate-forme fixe ou mobile (402) est pourvue d'une poulie fixe ou mobile (411) pour un câble de levage (410) déplacé horizontalement par rapport au dispositif de levage (401).

12. Ensemble de hissage selon la revendication 1, **caractérisé en ce que** l'ensemble cadre (200) est divisé en parties qui peuvent être transportées dans un conteneur normalisé ISO.
